# EUROPEAN PATENT SPECIFICATION

(11) **EP 2 656 322 B1**
(45) Date of publication and mention of the grant of the patent: **25.08.2021**
(21) Application number: 11805496.4
(22) Date of filing: 21.12.2011
(51) Int. Cl.: G07C 9/00, H04L 29/06

(54) **INTRUSION DETECTION**
EINDRINGLINGSERKENNUNG
DÉTECTION D'INTRUSIONS

(30) Priority: 21.12.2010 EP 10196192
(43) Date of publication of application: 30.10.2013
(73) Proprietor: ABB Schweiz AG, 5400 Baden (CH)
(72) Inventor: HADELI, Hadeli, CH-5400 Baden (CH); SCHIERHOLZ, Ragnar, 32427 Minden (DE); OBERMEIER, Sebastian, CH-5323 Rietheim (CH)
(74) Representative: Vossius & Partner Patentanwälte Rechtsanwälte mbB
(86) International application number: PCT/EP2011/073595
(87) International publication number: WO 2012/085087

(56) References cited:
- FR-A1- 2 761 181
- US-A1- 2003 023 874
- US-A1- 2006 136 575
- CHI-HO TSANG ET AL: "Multi-Agent Intrusion Detection System in Industrial Network using Ant Colony Clustering Approach and Unsupervised Feature Extraction", INDUSTRIAL TECHNOLOGY, 2005. ICIT 2005. IEEE INTERNATIONAL CONFERENCE ON HONG KONG 14-17 DEC. 2005, PISCATAWAY, NJ, USA,IEEE, 14 December 2005 (2005-12-14), pages 51-56, XP010897610, DOI: 10.1109/ICIT.2005.1600609 ISBN: 978-0-7803-9484-1

## Description

### FIELD OF THE INVENTION

The invention relates to the field of cyber security in information technology, and in particular to intrusion detection in industrial automation and control systems.

### BACKGROUND OF THE INVENTION

Intrusion Detection Systems (IDS) are installed at key locations within any kind of sensitive Information Technology (IT) infrastructure. They observe all network traffic, and evaluate the traffic based on predefined network traffic patterns. Whenever a single data packet or a combination of packets matches a defined pattern, the IDS conclude on an intrusion and raise a security alarm event.

Patent application WO 2010/069698 describes an IDS that monitors network traffic for deviation from a pattern or model of expected traffic (i.e. traffic known as non-malicious).

In deterministic systems, such a model can be automatically derived from static system description or configuration data.

Integrated security systems allow concentrating physical security properties related to work-force individuals such as holidays, time and attendance schedules, or physical access control at a single place in order to allow monitoring.

Patent application US 2003/0023874 is concerned with the interconnection of a facility protection management system and Information Systems (IS). Each of the information systems and the facility protection system sends event data packets reporting events such as alarms to a central security server that determines whether actions in any of the systems are to be taken in response. The security server may also provide information about a new or changed user to the IS, in order for access privileges of the user in respect of the IS to be determined.

Industrial Automation and Control Systems (IACS) are used extensively to protect, control and monitor industrial processes in industrial plants for e.g. processing goods or generating power, as well as to protect, control and monitor extended primary systems like electric power, water or gas supply systems including their respective substations. An IACS generally has a large number of process controllers, sensors, and actuators distributed in an industrial plant or over an extended primary system, and communicatively interconnected via an industrial communication system. Overall, an IACS may easily comprise thousands of assets including secondary devices (controllers, sensors, actuators, communication network equipment) and individual device components thereof, together making up the infrastructure or hardware part of the IACS. As with most IT systems, the standard approach in detecting intrusion into IACS is by monitoring, observing and analyzing network traffic. However, this does not always reveal the intrusion especially when the intruder is a disgruntled employee who has legitimate access to the IACS and/or when the intrusion involves tampering with the physical infrastructure of the IACS or the primary equipment.

C.-H. Tsang and S. Kwong, "Multi-agent intrusion detection system in industrial network using ant colony clustering approach and unsupervised feature extraction", IEEE International Conference on Industrial Technology, 2005, discloses a multi-agent IDS architecture that is designed for decentralized intrusion detection and prevention control in large switched networks and that uses a biologically inspired learning model is proposed for anomaly intrusion detection in the multi-agent IDS.

### DESCRIPTION OF THE INVENTION

It is therefore an objective of the invention to detect intrusion attempts into an Industrial Automation and Control System (IACS) based on unsuspicious network traffic patterns. This objective is achieved by an intrusion detector and a method of detecting intrusion according to the independent claims. Preferred embodiments are evident from the dependent patent claims.

According to the invention, an Intrusion Detection System (IDS) takes into account context information, or non-network related information, representative of conditions or constellations beyond the limits of the IACS, and exceeding a mere observation of network traffic patterns. The integration of context information sources into cyber intrusion detection relates the information of the network packet to different type of non-network information, i.e. information which describes a status or situation of the system, but which is not part of the network traffic as observed by intrusion detection/prevention sensors. This information is retrieved from a work-force management system and includes, but is not limited to, shift plans describing which work-force individuals should be active on the system, information from the physical access control describing which individuals have local access to different parts of the system and which individuals are physically present where in the system, approved work orders describing which individuals have permission to perform which functions in the system, or configuration switches that represent different use scenarios the system may be in and for which use scenarios different rule sets do apply.

According to the invention, the context information is only evaluated upon interception of the network packet, which is subsequent to the creation or change of a user account, and subsequent to the session start or logon, and may therefore include the most recently available and up-to-date context data.

The proposed invention relies on known usage patterns in an IACS as a special purpose system including typical day-to-day operations, deterministic information and approved modifications. It then detects deviations from this expected behaviour based on white lists of information implying that any information/commands that are used during operation of control systems are well-planned and follow a proper workflow and paperwork.

By way of example, network traffic caused by a maintenance engineer is legitimate traffic whenever the engineer is authorized to perform the maintenance and also present at the site. If, however, there was no approved request for maintenance, or no maintenance engineer is present while a local authentication request or local network traffic related to engineering activity is observed, this can be considered as an unauthorized attempt to cause harm. Likewise, a local attempt to log into the system by an operator who is currently on an approved vacation and for whom the physical access control system does not confirm presence at the site may be considered suspicious. In both examples, existing IDS cannot signal an intrusion, as the network traffic caused by the maintenance engineer and the operator actually follow the predefined expected network traffic patterns and only the specific context points to a suspicious situation.

Integrating additional context or non-network information into intrusion detection and prevention systems enables security incidents to be defined more precisely, which ultimately reduces the occurrence of false negative errors and increases the reliability of automated identification of potentially malicious events or attacks.

The invention proposes a method of detecting intrusion into an Industrial Automation and Control System IACS adapted to be accessed by work force individuals such as operators and maintenance engineers who send network packets over a communication network to distributed and interconnected target devices of the IACS such as process controllers. The method comprises the steps of
- extracting packet source information such as an IP or MAC address, or a time of sending from a network packet,
- retrieving, or importing, from a work-force management or other supporting system handling both planning and tracking of work-force individuals, context or non-network information related to, or defined by, the extracted packet source information, and
- determining an intrusion or suspiciousness level based on the context information.

According to a preferred variant, a security configuration or rule-set is adapted in view of the context information. For instance, a security alarm threshold may be adjusted in order to limit information overload in case of an emergency. Or appropriate rule sets are activated allowing engineering accounts to be used and engineering protocols to be routed to the process controllers. In other words, a security configuration is adapted, based on retrieved context information, to specify legitimate and/or suspicious network traffic beyond the single network packet intrusion level. Corresponding rule-sets may subsequently be applied to all observed traffic in the IACS.

According to advantageous embodiments, the method comprises the steps of
- determining, from the extracted packet source information, a presumed sender employee or work-force individual,
- retrieving, from a physical access control system as a the work-force management system, a physical location or on-site presence of the employee at the time of packet sending as context information,
- correlating the physical location with further context information related to the sender employee and indicating sender employee office, shift plan, and/or work orders.

Hence, various types of context information may be correlated in order to consolidate, or determine, the system's current operational context and to detect suspicious situations based there upon. In particular, correlating context information from a physical access control system with other non-network data sources enables more refined detection of intrusion situations. By way of example, an operator whose shift has ended has not left the site according to the physical access control system and tries to operate certain commands that are harmful for the system. Or an individual is entering the site through a physical access control system but is not scheduled to work and does not have approved work orders.

The present invention also relates to a computer program product including computer program code for controlling one or more processors of an intrusion detection device adapted to be connected to a communication network of an industrial automation and control system, particularly, a computer program product including a computer readable medium containing therein the computer program code.

### BRIEF DESCRIPTION OF THE DRAWINGS

The subject matter of the invention will be explained in more detail in the following text with reference to preferred exemplary embodiments which are illustrated in the attached drawings, in which:
Fig.1 is a flowchart of the proposed intrusion detection systems integrating context or non-network packet information;
Fig.2 is a flowchart of an exemplary intrusion detection system correlating physical access information and organizational information.

### DETAILED DESCRIPTION OF PREFERRED EMBODIMENTS

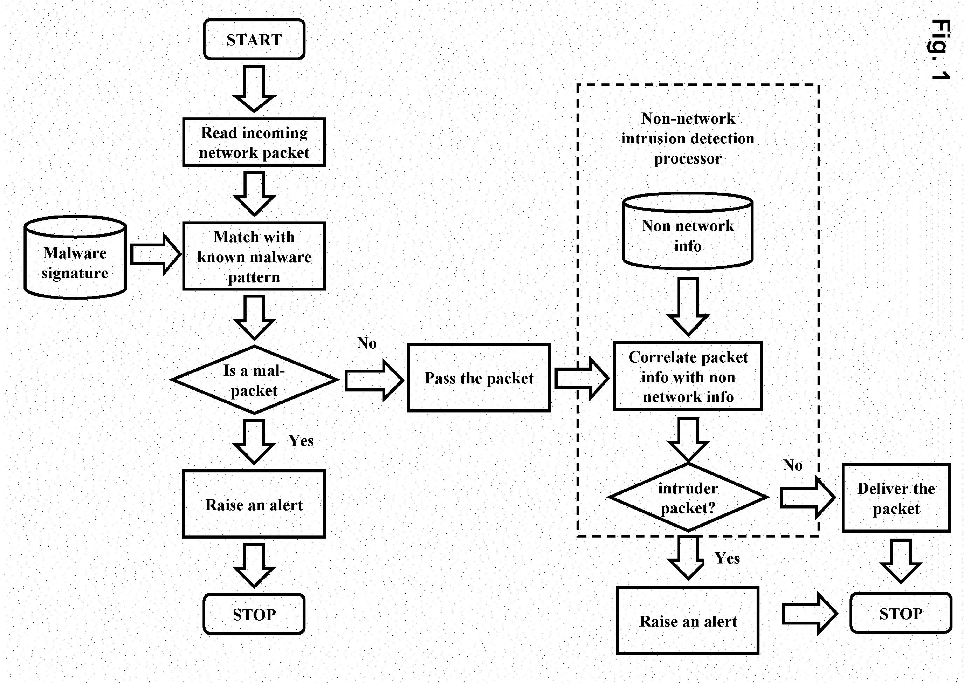

Fig.1 shows an intrusion detection system that matches incoming network packet with known mal-packet signature. The network traffic that is claimed to be clean by this step is injected into another process that basically correlates the information of the network packet with different type of non-network information.

Output of the network based evaluation is called pass network assessed traffic. The pass network assessed traffic is then injected into a processor called non-network intrusion detection processor.

Non-network or context-based intrusion detection processor is responsible to analyze the information of the network packet and correlate that with the non-networking information. The Non-network intrusion detection preprocessor is composed out of the following elements:
- Online context-information database for storing non-network operational information. This can be information from the human resources about personnel scheduling, physical access control information, etc.
- Information Correlator engine. This correlator engine responsible for correlating the network packet to the information in the real-time database. The goal is to discover whether there is a contradiction between the incoming network packets to the available non-network information. The information correlator engine will produce only the following conclusions, i.e. contradiction (YES) or no contradiction (NO).
- Alerting Alarm. This alerting alarm is used to raise an alarm should the correlator engine show a YES contradiction result.

Non-network information is information that describes the system situation, but is not part of the network traffic as it is observed by intrusion detection/prevention sensors. This includes, but is not limited to, shift plans describing which individuals should be active on the system, information from the physical access control describing which individuals have local access to different parts of the system, approved work orders describing which individuals have permission to perform which functions in the system or configuration switches that describe different use scenarios the system may be in, and for which different rule sets should be applied.

For instance, in some installations, a physical switch is deployed in the control system to enable engineering mode. Controllers only accept configuration changes when the switch is in engineering mode enabled position. The proposed invention takes the position of that switch into account, and can apply the appropriate rule set allowing engineering accounts to be used, allowing engineering protocols to be routed to the controllers, etc.

In another instance, the control system detects an emergency situation by its supervisory functions or by a manual command of an operator/supervisor. The proposed invention takes this context into account and switches into emergency rule set. For example, this rule set could raise the notification threshold on security alarms in order to reduce the information overload on operators handling the emergency situation. Another example can be where the normal operation rule set does not allow remote access while the emergency rule set allows remote access after supervisor acknowledgement.

A first example describes an extension to the network-based IDS by considering the physical access information and organizational/human resources information. Physical access information implies that physical access to any door (entry/leave) is logged and registered in the system. Organizational/human resources information implies vocation and sickness information are properly register in the system. The non-network intrusion detection processor is designed as follows:
- The real-time database contains the most updated information on:
   1. General employee information: employeelD, firstname, lastname, IP address of the employee computer, room number
   2. Physical access information: employeelD, currentLocation, enteringTime, leavingTime
   3. Organizational/human resources information: employeelD, startVocation, endVocation
- The correlation engine works as follows:
   1. It retrieves the source address of the network packet, for instance 10.10.10.1, and derives employee-ID there from
   2. It then checks whether the employee is on vacation or not by querying the organizational/human resources information. If the employee is on vacation, then an alert is raised. Otherwise, query whether the employee is in his office. If from the physical access information, the employee is not in the office, raise an alert. Otherwise, pass the message.

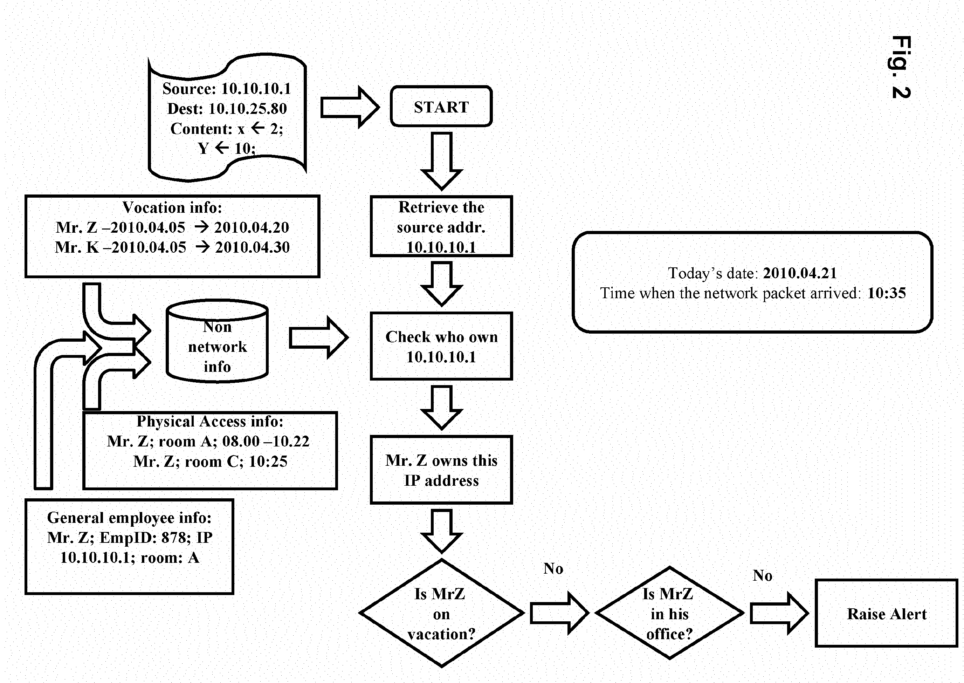

Fig.2 depicts an example of this realization:
1. An employee named Mr. Z has the following personal information:
   a. Employee ID and role: z_878; Engineer
   b. Location and IP address of the engineering server: Room A; 10.10.10.1
2. His organizational/human resources information is:
   a. Vacation period: 2010.04.05 - 2010.04.20
3. His physical access information is:
   a. 2010.04.21 07.54 - arrives at the facility
   b. 2010.04.21 08.00 - enters Room A
   c. 2010.04.21 10.22 - leaves Room A
   d. 2010.04.21 10.25 - enters Room C
4. At time 10.35, the IDS system detects traffic to change parameters of the system coming from address 10.10.10.1. After analysis of the traffic's content, the IDS resumes that it is valid and not mal-traffic.
5. The network packet is then analyzed by the disclosed invention. The following steps show how the evaluation is done by the non-network intrusion detection system processor:
   a. The processor queries the source address and the timestamp of the network packet. *It comes from 10.10.10.1 at 10:35*
   b. The processor access the employee information to find out who owns the address 10.10.10.1. *Mr. Z owns the IP address 10.10.10.1, the computer resides in room A.*
   c. The processor access the organizational information to check the absences of Mr. Z. *It finds out that Mr. Z is no longer on vacation.*
   d. The processor checks the physical access information of Mr. Z. *It finds out that Mr. Z is in room C at 10:35.*
   e. The processor raises an alarm since it is unknown who sent the network packet from 10.10.10.1 at 10:35.
6. Alternatively, or complementary, the same result or conclusion can be arrived at via the following rule set instance generated based on the above-mentioned context information:
   a. At time: 2010.04.21 07.54 → Deny any traffic from z_878
   b. At time: 2010.04.21 08.00 → Allow Engineering Traffic from z_878 and only from computer address 10.10.10.1. Validity 2010.04.21 07.54 until 2010.04.21 17.00
   c. At time: 2010.04.21 10.22 → Deny any traffic from z_878
   d. At time: 2010.04.21 10.25 → Deny any traffic from z_878

In a second example, an extension to the network-based IDS is by accommodating information from the approved work orders from a change management system. Information from the approved work orders from a change management system imply a formal description of the approved work orders to change certain parameters on a certain entity/resource in the system by an operator. The non-network intrusion detection processing is designed as follows:
- The database that stores the formal description of the approved work orders. The formal description contains the following items:
   1. OrderlD
   2. EmployeelD
   3. ApprovallD (supervisorlD)
   4. Time of approval
   5. EntitylD/ResourcelD of which a change is to be made
   6. Original parameter/settings
   7. New parameter/settings
   8. Time validity for conducting the task
- The correlation engine works as follows:
   1. From the network packet, it retrieves the following information: orderlD, employeelD, current time, entitylD/resourcelD, and new parameter settings
   2. It then checks whether the information contradict with the formal description that is stored in the database. If for instance, the current time is not within the valid time range for conducting the task, raise an alert. Otherwise, pass the message.

An example of this realization can be shown as follows:
1. An employee named Mr.K receives the following work order to change 5 processing parameters on the boiler B in their factory. The following shows the formal description of the order:
   ■ orderlD:Boi_234234
   ■ employeelD: 898
   ■ ApprovallD: 542
   ■ Time of approval: 20100610 15:00
   ■ EntitylD: Boi_B
   ■ Original parameters setting: p=45; q=112; r=87; s=23; t=9
   ■ New parameters setting: p=40; q=110; r=88; s=23; t=9
   ■ Time validity: 20100610 18:00 → 20100610 19:00
2. After receiving an order on 20100610 15:25, Mr. K goes back to his desk.
   Since he already has another commitment this evening, he thinks of changing the parameters immediately. He fires up the SCADA console and change the parameters.
3. The IDS system detects traffic to change parameters of system coming from 10.10.10.5. After analysis the traffic's content, the IDS resumes that it is valid and not a malicious traffic.
4. The network packet is then analyzed by the disclosed invention. The following steps show how the evaluation is done by the non-network intrusion detection system processor:
   ■ The processor queries the orderlD.
   ■ The processor queries the entitylD. It is Boi_B. From the main database, the processor knows that the relevant controller for Boi_B is located at 10.10.80.1. The traffic destination is 10.10.80.1. This is a valid destination and matches the information from the approved work order in the database.
   ■ The processor queries the parameter settings from the network packet and compares it to the formal description in the database. Instead of sending p=40; q=110; r=88; s=23; t=9, Mr. K sends p=40; q=110; r=88; s=23; t=19. The system raises an alert and drops the package.
   ■ The processor queries the time validity to execute the command. Since Mr. K executes the command earlier than it should be, the system raises an alert and drop the package.
5. Alternatively, or complementary, the same result or conclusion can be arrived at via the following rule set instance generated based on the above-mentioned context information:
   ■ When the change order is generated, the Context Aware Security Manager is informed and a new rule is generated specific for this task. The rule is as follows:
      ■ Allow traffic from 898 with the following content {Boi_234234, 542, 20100610 15:00, p=40; q=110; r=88; s=23; t=9} to Boi_B. Validity: 20100610 18:00 → 20100610 19:00

## Claims

1. An Industrial Automation and Control System adapted to be accessed by work-force individuals sending network packets over a communication network to a target device of said Industrial Automation and Control System, the Industrial Automation and Control System comprising a centralized intrusion detector, wherein the centralized intrusion detector is adapted to intercept a network packet directed to the target device different from the centralized intrusion detector, the target device being a process controller, to determine an intrusion level of the network packet by evaluating context information retrieved from a work-force management system and related to packet source information of the intercepted network packet, and to:
deliver the network packet to the target device if there is no contradiction between the intercepted network packet and the context information;
cause an alarm to be raised if there is a contradiction between the intercepted network packet and the context information.

2. The Industrial Automation and Control System according to claim 1, **characterized in that** it comprises a physical switch deployed in the control system to enable an engineering mode, wherein the Industrial Automation and Control System is adapted to take a position of the physical switch into account and to, depending on the position of the physical switch, apply a rule set that allows engineering accounts to be used or engineering protocols to be routed to controllers.

3. The Industrial Automation and Control System according to claim 1 or 2, **characterized in that** the context information includes a physical location of a work-force individual determined as presumed sender of the network packet.

4. The Industrial Automation and Control System according to any one of the previous claims, **characterized in that** the context information includes shift plans and/or work orders.

5. The Industrial Automation and Control System according to any one of the previous claims, **characterized in that** the context information relates to configuration switches that represent different use scenarios the system may be in.

6. The Industrial Automation and Control System according to any one of the previous claims, **characterized in that** the centralized intrusion detector comprises an information correlator engine adapted to correlate the network packet to non-network information in a real-time database to determine whether there is a contradiction between the network packet and the non-network information.

7. A method of detecting intrusion into an Industrial Automation and Control System IACS adapted to be accessed by work force individuals sending network packets over a communication network to target devices of the IACS, comprising, by a centralized intrusion detector,
intercepting a network packet directed to a target device different from the centralized intrusion detector, the target device being a process controller,
extracting packet source information from the network packet,
retrieving, from a work-force management system, context information related to the extracted packet source information,
determining an intrusion level based on the context information,
delivering the network packet to the target device if there is no contradiction between the intercepted network packet and the context information,
causing an alarm to be raised if there is a contradiction between the intercepted network packet and the context information.

8. The method according to claim 7,wherein the IACS comprises a physical switch deployed in the control system to enable an engineering mode, and the method further comprises taking a position of the physical switch into account and, depending on the position of the physical switch, applying a rule set that allows engineering accounts to be used or engineering protocols to be routed to controllers.

9. The method according to claim 7 or 8, wherein the context information is evaluated in response to interception of the network packet.

10. The method according to one of claims 7 to 9, comprising
determining, from the extracted packet source information, a sender employee, and retrieving, from a physical access control system, a physical location of the employee as context information.

11. The method according to claim 10, comprising correlating the physical location with further context information related to the sender employee.

12. The method according to one of claims 7 through 11, wherein the context information includes shift plans, in particular describing which work-force individuals should be active on the system.

13. The method according to one of claims 7 through 12, wherein the context information includes approved work orders, in particular describing which individuals have permission to perform which functions in the system.

14. The method according to one of claims 7 through 13, wherein the intercepted network packet directed to the target device is sent by a work-force individual, and contains information and/or commands that are used during operation of a control system.

## Patentansprüche

1. Industrielles Automatisierungs- und Steuersystem, das ausgelegt ist für einen Zugriff durch Belegschaftspersonen, die Netzpakete über ein Kommunikationsnetz an eine Zielvorrichtung des industriellen Automatisierungs- und Steuersystems senden, wobei das industrielle Automatisierungs- und Steuersystem einen zentralisierten Eindringdetektor aufweist, wobei der zentralisierte Eindringdetektor ausgelegt ist, ein Netzpaket abzufangen, das an die von dem zentralisierten Eindringdetektor verschiedene Zielvorrichtung gerichtet ist, wobei die Zielvorrichtung eine Prozesssteuereinheit ist, um ein Eindringniveau des Netzpakets durch Beurteilen von Kontextinformationen, die von einem Belegschaftsmanagementsystem abgerufen werden und sich auf Paketquellinformationen des abgefangenen Netzpakets beziehen, zu bestimmen, und zum:
Liefern des Netzpakets an die Zielvorrichtung, wenn zwischen dem abgefangenen Netzpaket und den Kontextinformationen kein Widerspruch besteht;
Bewirken, dass ein Alarm ausgelöst wird, wenn zwischen dem abgefangenen Netzpaket und den Kontextinformationen ein Widerspruch besteht.

2. Industrielles Automatisierungs- und Steuersystem nach Anspruch 1, **dadurch gekennzeichnet, dass** es einen physischen Schalter aufweist, der in dem Steuersystem eingesetzt ist, um einen Ingenieursbetriebsmodus zu aktivieren, wobei das industrielle Automatisierungs- und Steuersystem ausgelegt ist, eine Position des physischen Schalters zu berücksichtigen und abhängig von der Position des physischen Schalters eine Regelgruppe anzuwenden, die erlaubt, dass Ingenieurskonten verwendet werden oder Ingenieursprotokolle zu Steuereinheiten geleitet werden.

3. Industrielles Automatisierungs- und Steuersystem nach Anspruch 1 oder 2, **dadurch gekennzeichnet, dass** die Kontextinformationen einen physischen Ort einer Belegschaftsperson, die als angenommener Sender des Netzpakets bestimmt wird, enthalten.

4. Industrielles Automatisierungs- und Steuersystem nach einem der vorhergehenden Ansprüche, **dadurch gekennzeichnet, dass** die Kontextinformationen Dienstpläne und/oder Arbeitsaufträge aufweisen.

5. Industrielles Automatisierungs- und Steuersystem nach einem der vorhergehenden Ansprüche, **dadurch gekennzeichnet, dass** sich die Kontextinformationen auf Konfigurationsschalter beziehen, die verschiedene Verwendungsszenarien, in denen sich das System befinden kann, repräsentieren.

6. Industrielles Automatisierungs- und Steuersystem nach einem der vorhergehenden Ansprüche, **dadurch gekennzeichnet, dass** der zentralisierte Eindringdetektor eine Informationskorrelatormaschine aufweist, die ausgelegt ist, das Netzpaket mit Nicht-Netzpaketinformationen in einer Echtzeitdatenbank zu korrelieren, um zu bestimmen, ob es einen Widerspruch zwischen dem Netzpaket und den Nicht-Netzpaketinformationen gibt.

7. Verfahren zum Detektieren eines Eindringens in ein industrielles Automatisierungs- und Steuersystem IACS, das so ausgelegt ist, dass durch Belegschaftspersonen, die Netzpakete über ein Kommunikationsnetz an Zielvorrichtungen des IACS senden, auf es zugegriffen wird, das folgende Schritte durch einen zentralisierten Eindringdetektor aufweist:
Abfangen eines Netzpakets, das an eine Zielvorrichtung gerichtet ist, die von dem zentralisierten Eindringdetektor verschieden ist, wobei die Zielvorrichtung eine Prozesssteuereinheit ist,
Extrahieren von Paketquellinformationen aus dem Netzpaket,
Abrufen von Kontextinformationen, die sich auf die extrahierten Paketquellinformationen beziehen, von einem Belegschaftsmanagementsystem,
Bestimmen eines Eindringniveaus anhand der Kontextinformationen,
Liefern des Netzpakets an die Zielvorrichtung, wenn zwischen dem abgefangenen Netzpaket und den Kontextinformationen kein Widerspruch besteht,
Auslösen eines Alarms, wenn zwischen dem abgefangenen Netzpaket und den Kontextinformationen ein Widerspruch besteht.

8. Verfahren nach Anspruch 7, wobei das IACS einen physischen Schalter aufweist, der in dem Steuersystem eingesetzt wird, um einen Ingenieursbetriebsmodus zu aktivieren, wobei das Verfahren ferner aufweist, eine Position des physischen Schalters zu berücksichtigen und abhängig von der Position des physischen Schalters eine Regelgruppe anzuwenden, die erlaubt, dass Ingenieurskonten verwendet werden oder Ingenieursprotokolle zu Steuereinheiten geleitet werden.

9. Verfahren nach Anspruch 7 oder 8, wobei die Kontextinformationen als Reaktion auf das Abfangen des Netzpakets beurteilt werden.

10. Verfahren nach einem der Ansprüche 7 bis 9, das aufweist, aus den extrahierten Paketquellinformationen einen Sende-Angestellten zu bestimmen und von einem physischen Zugriffssteuersystem einen physischen Ort des Angestellten als Kontextinformationen abzurufen.

11. Verfahren nach Anspruch 10,
das aufweist, den physischen Ort mit weiteren Kontextinformationen bezüglich des Sende-Angestellten zu korrelieren.

12. Verfahren nach einem der Ansprüche 7 bis 11,
wobei die Kontextinformationen Dienstpläne aufweisen, die insbesondere beschreiben, welche Belegschaftspersonen auf dem System aktiv sein sollten.

13. Verfahren nach einem der Ansprüche 7 bis 12,
wobei die Kontextinformationen genehmigte Arbeitsaufträge aufweisen, die insbesondere beschreiben, welche Personen eine Genehmigung besitzen, welche Funktionen in dem System auszuführen.

14. Verfahren nach einem der Ansprüche 7 bis 13,
wobei das abgefangene Netzpaket, das an die Zielvorrichtung gerichtet ist, durch eine Belegschaftsperson gesendet wird und Informationen und/oder Befehle enthält, die während des Betriebs eines Steuersystems verwendet werden.

## Revendications

1. Système d'automatisation et de commande industrielles adapté à être accédé par des membres du personnel envoyant des paquets réseau, sur un réseau de communication, à un dispositif cible dudit système d'automatisation et de commande industrielles, le système d'automatisation et de commande industrielles comprenant un détecteur d'intrusion centralisé, le détecteur d'intrusion centralisé étant adapté à intercepter un paquet réseau destiné au dispositif cible différent du détecteur d'intrusion centralisé, le dispositif cible étant un contrôleur de processus, pour déterminer un niveau d'intrusion du paquet réseau en évaluant des informations de contexte récupérées auprès d'un système de gestion du personnel et relatives à des informations de source de paquet du paquet réseau intercepté, et pour :
remettre le paquet réseau au dispositif cible en l'absence d'une contradiction entre le paquet réseau intercepté et les informations de contexte ;
déclencher une alarme en présence d'une contradiction entre le paquet réseau intercepté et les informations de contexte.

2. Système d'automatisation et de commande industrielles selon la revendication 1, **caractérisé en ce qu'**il comprend un commutateur physique déployé dans le système de commande pour activer un mode technicien, le système d'automatisation et de commande industrielles étant adapté à prendre en compte une position du commutateur physique et à, en fonction de la position du commutateur physique, appliquer un ensemble de règles qui permet l'utilisation de comptes techniciens ou le routage de protocoles techniciens jusqu'à des contrôleurs.

3. Système d'automatisation et de commande industrielles selon la revendication 1 ou 2, **caractérisé en ce que** les informations de contexte comportent une localisation physique d'un membre du personnel déterminé comme étant l'émetteur présumé du paquet réseau.

4. Système d'automatisation et de commande industrielles selon l'une quelconque des revendications précédentes, **caractérisé en ce que** les informations de contexte comportent des plannings d'affectation des postes et/ou des ordres de travail.

5. Système d'automatisation et de commande industrielles selon l'une quelconque des revendications précédentes, **caractérisé en ce que** les informations de contexte sont relatives à des commutateurs de configuration qui représentent différents scénarios d'utilisation dans lesquels le système est susceptible de se trouver.

6. Système d'automatisation et de commande industrielles selon l'une quelconque des revendications précédentes, **caractérisé en ce que** le détecteur d'intrusion centralisé comprend un moteur de corrélation d'informations adapté à corréler le paquet réseau avec des informations hors réseau dans une base de données temps réel dans le but de déterminer s'il existe ou non une contradiction entre le paquet réseau et les informations hors réseau.

7. Procédé de détection d'une intrusion dans un système d'automatisation et de commande industrielles, noté IACS, adapté à être accédé par des membres du personnel envoyant des paquets réseau, sur un réseau de communication, à des dispositifs cibles de l'IACS, comprenant, par un détecteur d'intrusion centralisé,
l'interception d'un paquet réseau destiné à un dispositif cible différent du détecteur d'intrusion centralisé, le dispositif cible étant un contrôleur de processus,
l'extraction d'informations de source de paquet à partir du paquet réseau,
la récupération, auprès d'un système de gestion du personnel, d'informations de contexte relatives aux informations de source de paquet extraites,
la détermination d'un niveau d'intrusion sur la base des informations de contexte,
la remise du paquet réseau au dispositif cible en l'absence d'une contradiction entre le paquet réseau intercepté et les informations de contexte,
le déclenchement d'une alarme en présence d'une contradiction entre le paquet réseau intercepté et les informations de contexte.

8. Procédé selon la revendication 7, dans lequel l'IACS comprend un commutateur physique déployé dans le système de commande pour activer un mode technicien, et lequel procédé comprend en outre la prise en compte d'une position du commutateur physique et, en fonction de la position du commutateur physique, l'application d'un ensemble de règles qui permet l'utilisation de comptes techniciens ou le routage de protocoles techniciens jusqu'à des contrôleurs.

9. Procédé selon la revendication 7 ou 8,
dans lequel les informations de contexte sont évaluées en réponse à l'interception du paquet réseau.

10. Procédé selon l'une des revendications 7 à 9, comprenant
la détermination, à partir des informations de source de paquet extraites, d'un employé émetteur, et
la récupération, auprès d'un système de contrôle d'accès physique, d'une localisation physique de l'employé en tant qu'informations de contexte.

11. Procédé selon la revendication 10,
comprenant la corrélation de la localisation physique avec des informations de contexte additionnelles relatives à l'employé émetteur.

12. Procédé selon l'une des revendications 7 à 11,
dans lequel les informations de contexte comportent des plannings d'affectation des postes, décrivant plus particulièrement quels membres du personnel doivent être actifs sur le système.

13. Procédé selon l'une des revendications 7 à 12,
dans lequel les informations de contexte comportent des ordres de travail approuvés, décrivant plus particulièrement quels membres ont la permission d'accomplir quelles fonctions dans le système.

14. Procédé selon l'une des revendications 7 à 13,
dans lequel le paquet réseau intercepté destiné au dispositif cible est envoyé par un membre du personnel et contient des informations et/ou des instructions qui sont utilisées au cours de l'exploitation d'un système de commande.
